# EUROPÄISCHE PATENTSCHRIFT

(11) **EP 1 348 983 B1**
(45) Veröffentlichungstag und Bekanntmachung des Hinweises auf die Patenterteilung: **01.08.2007**
(21) Anmeldenummer: 03005257.5
(22) Anmeldetag: 10.03.2003
(51) Int. Cl.: G01V 8/10

(54) **Optoelektronischer Sensor mit Positionsmessvorrichtung**
Optoelectronic sensor including position locating device
Capteur opto-électronique avec dispositif pour déterminer la position du capteur

(30) Priorität: 27.03.2002 DE 10213843
(43) Veröffentlichungstag der Anmeldung: 01.10.2003
(73) Patentinhaber: SICK AG, 79183 Waldkirch (DE)
(72) Erfinder: Gehring, Roland, 79215 Elzach-Prechtal (DE)
(74) Vertreter: Manitz, Finsterwald & Partner GbR

(56) Entgegenhaltungen:
- EP-A- 0 855 835
- EP-A- 1 189 021
- EP-B- 0 462 905
- WO-A-99/18732
- US-A- 5 506 644
- US-A- 5 799 082

## Beschreibung

Die Erfindung betrifft eine optoelektronische Sensoranordnung mit einem Sensor zur optischen Erfassung eines Objekts innerhalb eines Überwachungsbereichs. Ein derartiger Sensor besitzt typischerweise einen Lichtsender zum Aussenden eines Sendelichtstrahls sowie einen Lichtempfänger zur Erzeugung von Lichtempfangssignalen in Abhängigkeit von einer Lichtbeaufschlagung. Je nach Vorhandensein oder Lage eines Objekts im Überwachungsbereich ändert sich diese Lichtbeaufschlagung. Eine Auswerte- und Steuereinrichtung kann durch Auswertung der Lichtempfangssignale somit das Vorhandensein oder die Lage des Objekts erkennen, um beispielsweise ein entsprechendes Objekterfassungssignal zu erzeugen.

Bei einem derartigen Objekt kann es sich um einen Gegenstand, beispielsweise ein Gepäckstück oder ein Versandpaket auf einem Transportband, oder um eine an einem Gegenstand angebrachte Markierung handeln, beispielsweise um einen Barcode oder einen zweidimensionalen optischen Code.

Für manche Anwendungen derartiger Sensoren ist eine unerwünscht aufwändige Vermessung der Position des Sensors bezüglich des Überwachungsbereichs oder bezüglich der darin befindlichen, zu erfassenden Objekte erforderlich.

Aus der WO 99/ 18732 A1 ist eine tragbare Kamera mit GPS-Antenne und -Empfänger bekannt.

Die US 5,799,082 offenbart eine Digitalkamera mit Positionsbestimmungssystem.

Die EP 0 462 905 B1 beschreibt eine elektronische Kamera mit einer Detektoreinrichtung zum Detektieren einer dreidimensionalen Position, an der sich die Kamera befindet.

Aus der US 5,506,644 ist eine Kamera mit einer Positionsinformationsauf zeichnung bekannt.

Die EP 1 189 021 A1 beschreibt ein Kamerasystem mit einer digitalen Kamera und einem GPS-Empfänger.

Die EP 0 855 835 A2 offenbart eine Kamera mit einer GPS-Einheit.

Die EP 1 076 221 A2 beschreibt ein roboterbasiertes Messsystem.

Eine Aufgabe der Erfindung besteht darin, eine korrekte Erfassung von Objekten und eine korrekte Zuordnung von Objekterfassungssignalen zu den betreffenden Objekten zu vereinfachen und zu verbessern.

Der erfindungsgemäße Sensor ist also mit einer Positionsmesseinrichtung ausgestattet, die ein oder mehrere Positionserfassungssignale ermittelt oder empfängt und an eine Auswerte- und Steuereinrichtung übermittelt. Diese berechnet aus den Positionserfassungssignalen eine Raumposition des Sensors - beispielsweise in X-, Y-, Z-Koordinaten -, eine Winkelausrichtung des Sensors - beispielsweise innerhalb einer vorgegebenen Ebene, insbesondere der Horizontalebene -, oder eine Winkellage des Sensors - beispielsweise relativ zu einer vorgegebenen Ebene, insbesondere der Horizontalebene -. Die Position oder Lage des Sensors kann dabei in absoluten Koordinaten - also bezüglich universeller Bezugspunkte -, oder in relativen Koordinaten - also bezüglich eines lokalen Bezugspunkts - bestimmt werden.

Die somit berechnete Raumposition, Ausrichtung oder Winkellage des Sensors kann mit einem Objekterfassungssignal verknüpft werden, das im Zusammenhang mit der eigentlichen Detektionsfunktion des Sensors ermittelt wird. Auf diese Weise kann eine korrekte räumliche Zuordnung zwischen diesem Objekterfassungssignal und dem entsprechenden Objekt erstellt werden, so dass das Objekterfassungssignal nicht unbeabsichtigt einem falschen Objekt zugeordnet wird. Somit kann beispielsweise sicher vermieden werden, dass ein auf einem Transportband befördertes Versandpaket aussortiert wird, obwohl ein dieser Aussortierung entsprechender Barcode nicht an diesem Versandpaket, sondern an einem weiteren Versandpaket identifiziert worden ist.

Der erfindungsgemäße Sensor kann mit der Positionsmesseinrichtung direkt oder indirekt, beispielsweise über die Auswerte- und Steuereinrichtung, verbunden sein.

Ein wesentlicher Vorteil der Erfindung besteht demnach darin, dass für die Installation oder den laufenden Betrieb eines Sensors dessen Raumposition oder Winkellage auf einfache Weise bestimmt und dem Sensorbetrieb zugrundegelegt werden kann, ohne dass der Anwender unerwünscht aufwändige Vermessungs- oder Justierungsmaßnahmen ergreifen muss. Beispielsweise sind folgende Anwendungsfälle möglich:
(a) Falls ein erfindungsgemäßer Sensor mit einem Barcodeleser in einer omnidirektionalen Lesestation stationär angeordnet ist, kann ein eingelesener Barcode aufgrund der ermittelten Raumposition, Ausrichtung und Winkellage des Sensors einem von möglicherweise mehreren Objekten im Überwachungsbereich eindeutig zugeordnet werden, ohne dass hierfür eine aufwändige Vermessung des Barcodelesers und des Überwachungsbereichs sowie eine entsprechende Parametrierung des Sensors erforderlich sind.
(b) Es sind auch Anwendungen möglich, bei denen beispielsweise mittels eines Laserscanners Volumenmessungen an Objekten durchgeführt werden. Für eine korrekte Berechnung eines gemessenen Volumens müssen die Raumposition und die Winkellage des Laserscanners bekannt sein. Diese Informationen können bei dem erfindungsgemäßen Sensor auf einfache und zuverlässige Weise beschafft werden.

Ein besonderer Vorteil des erfindungsgemäßen Sensors besteht darin, dass der Sensor - selbst wenn er lediglich für eine stationäre Betriebsanordnung vorgesehen ist - rasch für unterschiedliche Anwendungen oder Positionen umkonfiguriert werden kann, da die neue Raumposition oder Winkellage für den nachfolgenden Betrieb einfach durch Knopfdruck oder automatisch bestimmt werden kann, um der weiteren Sensorsteuerung und Signalauswertung zugrunde gelegt zu werden.

Als Positionsmesseinrichtung des erfindungsgemäßen Sensors kann beispielsweise ein Positionssignalempfänger vorgesehen sein, der zum Empfangen von Referenzsignalen eines satellitengestützten Positionssignalsendesystems ausgebildet ist. Ein derartiger Positionssignalempfänger übermittelt die Referenzsignale - beispielsweise nach einer Signalverstärkung - als Positionserfassungssignale an die Auswerte- und Steuereinrichtung. Bei dem satellitengestützten Positionssignalsendesystem kann es sich beispielsweise um das Global Positioning System (GPS) oder das zukünftige Galileo Satellitennavigationssystem handeln. Derartige Systeine senden über ein Netz von Satelliten ständig Funksignale aus. Aus der zeitlichen Zuordnung dieser Referenzsignale kann - auf bekannte Weise - ein Positions- oder Lagewert berechnet werden.

Ein Vorteil der Ausnutzung eines solchen satellitengestützten Positionssignalsendesystems besteht darin, dass die Positionssignalsender und die von diesen ausgesandten Referenzsignale global und kostenfrei zur Verfügung stehen. Somit müssen, abgesehen von der Ausstattung des Sensors mit dem genannten Positionssignalempfänger und der Auswerte- und Steuereinrichtung, keine zusätzlichen Maßnahmen getroffen werden, um an einem beliebigen Betriebsort die Position des Sensors anhand der dort empfangbaren Referenzsignale bestimmen zu können.

Gemäß einer anderen vorteilhaften Ausführungsform ist als Positionsmesseinrichtung ein Positionssignalempfänger vorgesehen, der die Referenzsignale empfängt, die von wenigstens einem lokalen, also in der Umgebung des optoelektronischen Sensors installierten Positionssignalsenders ausgesandt werden. Diese Referenzsignale werden in Positionserfassungssignale umwandelt, beispielsweise durch Filterung und Verstärkung. Ähnlich wie bei der vorstehend erläuterten Ausnutzung eines satellitengestützten Positionssignalsendesystems können also ein oder mehrere lokale Positionssignalsender installiert sein, die ständig oder auf Abruf Referenzsignale aussenden, die von dem Positionssignalempfänger empfangen werden können. Die Positionssignalsender dienen somit als Bezugspunkte, bezüglich derer anhand der empfangenen Referenzsignale eine relative Position, Ausrichtung oder Winkellage des Sensors berechnet werden kann.

Ein Vorteil des Einsatzes derartiger lokaler Positionssignalsender in Verbindung mit einem mit dem Sensor gekoppelten Positionssignalempfänger besteht darin, dass hinsichtlich der zu bestimmenden Raumpösition, Ausrichtung oder Winkellage eine sehr hohe Genauigkeit erzielt werden kann, insbesondere im Vergleich zu der Auswertung von Referenzsignalen eines satellitengestützten Positionssignalsendesystems.

Bei den von den Positionssignalsendern ausgesandten Referenzsignalen kann es sich um Funksignale handeln. Die Bestimmung der Sensorposition anhand der empfangenen Referenzsignale kann dabei nach dem Prinzip eines Funkfeuers erfolgen. Es ist bevorzugt, wenn das lokale Positionssignalsendesystem die Referenzsignale in derselben Form verschlüsselt und übermittelt, wie im Zusammenhang mit satellitengestützten Positionssignalsendesystemen bekannt.

Insbesondere ist es von Vorteil, wenn der genannte Positionssignalempfänger zum Empfang von Referenzsignalen sowohl eines satellitengestützten Positionssignalsendesystems als auch eines lokalen Positionssignalsenders geeignet ist. Dadurch wird die Möglichkeit einer besonders präzisen Positionsbestimmung mit der Unabhängigkeit von lokalen Positionssignalsendern und der Unabhängigkeit von den lokalen Empfangsbedingungen satellitengestützter Positionssignalsender verknüpft.

Im Hinblick auf die erläuterte Ausführungsform mit lokalem Positionssignalsendern bezieht sich die Erfindung auch auf ein optoelektronisches Sensorsystem, das zumindest einen lokalen Positionssender der genannten Art sowie einen optoelektronischen Sensor aufweist, der mit einem Positionssignalempfänger der genannten Art zum Empfangen von Referenzsignalen des lokalen Positionssignalsenders gekoppelt ist.

Die Positionsmesseinrichtung des erfindungsgemäßen Sensors kann gemäß einer weiteren vorteilhaften Ausführungsform einen Ausrichtungssensor, insbesondere einen Kreiselsensor, beispielsweise einen Kreiselkompass aufweisen, der wenigstens ein Positionserfassungssignal erzeugt, das einer aktuellen Ausrichtung des Sensors innerhalb einer vorbestimmten Ebene, beispielsweise der Horizontalebene entspricht.

Gemäß einer weiteren vorteilhaften Ausführungsform ist als Positionsmesseinrichtung ein Neigungssensor vorgesehen, der ein Positionserfassungssignal erzeugt, anhand dessen die Auswerte- und Steuereinrichtung eine aktuelle Winkellage des Sensors bezüglich der Vertikalen, der Horizontalen oder einer sonstigen Bezugsgeraden oder Bezugsebene berechnen kann. Der Neigungssensor kann beispielsweise - als so genannter statischer Beschleunigungssensor - einen Halbleiterbaustein aufweisen, oder er kann nach dem Prinzip einer integrierten Wasserwaage aufgebaut sein.

Zu den erläuterten Ausführungsformen der Positionsmesseinrichtung ist anzumerken, dass diese beliebig kombiniert werden können. Beispielsweise kann zusätzlich zu einem Positionssignalempfänger zum Empfangen von Referenzsignalen eines satellitengestützten Positionssignalsendesystems ein Kreiselsensor vorgesehen sein, so dass mehrere Positionserfassungssignale erzeugt werden können, aus denen die aktuelle Raumposition und die aktuelle Ausrichtung des Sensors im Raum ermittelt werden können. Beispielsweise ist es auch möglich, sowohl einen Positionssignalempfänger zum Empfangen von Referenzsignalen eines lokalen Positionssignalsenders, als auch einen Neigungssensor mit dem optoelektronischen Sensor zu koppeln, um anhand der jeweiligen Positionserfassungssignale eine aktuelle Raumposition und eine aktuelle Winkellage des Sensors berechnen zu können. Auch können der genannte Kreiselsensor und der Neigungssensors gemeinsam in einen optoelektronischen Sensor integriert sein, mit oder ohne Positionssignalempfänger.

Das Bestimmen einer aktuellen Raumposition, Ausrichtung oder Winkellage des Sensors, also das Berechnen dieser Informationen anhand eines eigens oder des zuletzt empfangenen Positionssignals, kann mittels der Auswerte- und Steuereinrichtung beispielsweise aufgrund eines vom Anwender eingegebenen Auslösebefehls ausgelöst werden. Zu diesem Zweck kann der Sensor mit einem Auslöseschalter ausgestattet sein, der vom Anwender gegebenenfalls betätigt wird.

Die Bestimmung einer aktuellen Raumposition oder Winkellage kann von der Auswerte- und Steuereinrichtung beispielsweise auch aufgrund einer Inbetriebnahme des Sensors veranlasst werden, und zwar aufgrund einer ersten Inbetriebnahme durch den Anwender oder aufgrund einer neuerlichen Inbetriebnahme beispielsweise nach einem Positionswechsel oder nach einer Umkonfigurierung des Sensors.

Ferner kann die Auswerte- und Steuereinrichtung in regelmäßigen, vorbestimmten oder durch den Anwender vorgebbaren Zeitabständen eine Neubestimmung der aktuellen Sensorposition oder -lage veranlassen.

Alternativ oder zusätzlich ist es möglich, dass die Auswerte- und Steuereinrichtung eine Bestimmung einer aktuellen Raumposition, Ausrichtung und/oder Winkellage des Sensors dann auslöst, wenn der Sensor ein neues Objekt im Überwachungsbereich erfasst, beispielsweise einen Barcode eingelesen hat.

Die Auswerte- und Steuereinrichtung ist vorzugsweise dergestalt ausgebildet, dass sie ein Objekterfassungssignal des Sensors einer aufgrund der empfangenen Positionssignale bestimmten Raumposition oder Winkellage des Sensors zuordnen kann, beispielsweise um ein dem betreffenden Objekt zugeordnetes Steuerungssignal auszugeben. Mit anderen Worten soll eine einmalig oder aktuell bestimmte Raumposition des Sensors einem Objekt zugeordnet werden können, das vom Sensor erfasst worden ist. Diese gegenseitige Zuordnung von Objektinformation und Rauminformation entspricht somit einer räumlichen Verknüpfung zwischen dem Sensor und dem betreffenden Objekt, um auf Grundlage dieser Verknüpfung beispielsweise mittels eines gesteuerten Aktors mit hoher Treffersicherheit dasjenige Gepäckstück oder Versandpaket aussondern zu können, das einen identifizierten Barcode trägt.

Um insbesondere bei mobilen Sensoranwendungen bei Bedarf möglichst umgehend die aktuelle Raumposition, Ausrichtung oder Winkellage des Sensors bestimmen zu können, ist es bevorzugt, wenn die Positionsmesseinrichtung - aufgrund einer entsprechenden Ansteuerung durch die Auswerte- und Steuereinrichtung - ständig die verfügbaren Positionserfassungssignale ermittelt und an die Auswerte- und Steuereinrichtung weiterleitet.

Weiterhin ist es bevorzugt, wenn die Positionsmesseinrichtung und die zugehörige Auswerte- und Steuereinrichtung in den Sensor dauerhaft integriert sind. Insbesondere kann die für die Berechnung der Raumposition, Ausrichtung oder Winkellage des Sensors vorgesehene Auswerte und Steuereinrichtung Teil derjenigen Auswerte- und Steuereinrichtung sein, die zur Steuerung des Lichtsenders und des Lichtempfängers sowie zur Auswertung der Lichtempfangssignale des optoelektronischen Sensors vorgesehen ist. Somit kann der erfindungsgemäße Sensor serienmäßig mit der Positionsmesseinrichtung ausgestattet sein, um - wie erläutert - für die Erstinbetriebnahme oder regelmäßig im Anwendungsbetrieb die Raumposition oder Winkellage des Sensors bezüglich universeller Raumkoordinaten oder bezüglich vorgegebener Bezugspositionen bestimmen zu können.

Der erfindungsgemäße Sensor kann anstelle des genannten Barcodelesers oder Laserscanners beispielsweise auch eine Kamera zur Erfassung zweidimensionaler Codes aufweisen.

Weitere Ausführungsformen der Erfindung sind in den Unteransprüchen genannt.

Die Erfindung wird nachfolgend beispielhaft unter Bezugnahme auf die Zeichnungen erläutert; in diesen zeigen:
- Fig. 1: eine Anwendung eines erfindungsgemäßen Sensors in einer stationären Betriebsanordnung und
- Fig. 2: eine Anwendung eines Sensors in einer mobilen Anordnung.

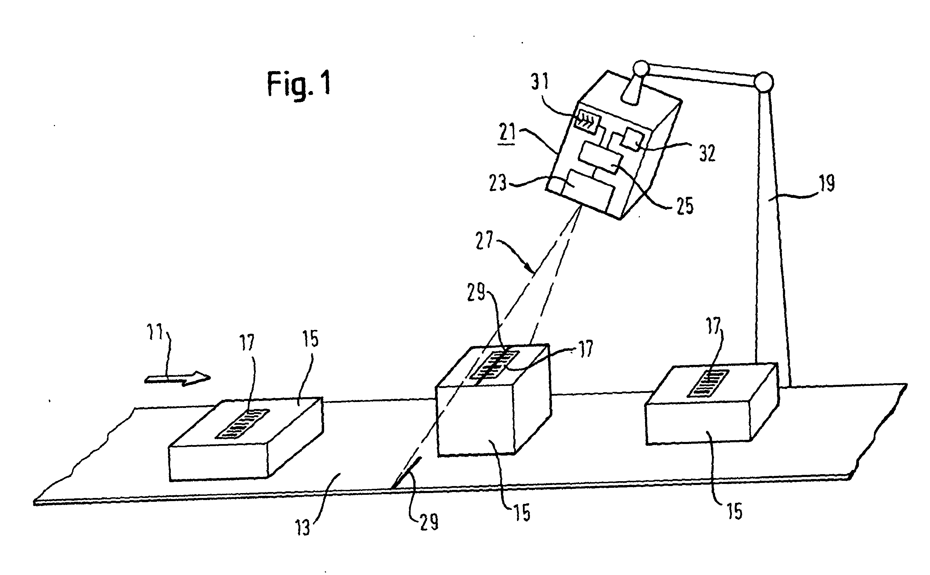

Fig. 1 zeigt in einer schematischen Perspektivansicht ein sich entlang einer Transportrichtung 11 bewegendes Transportband 13, auf dessen Oberseite drei Versandpakete 15 angeordnet sind. Jedes Versandpaket 15 trägt einen Barcode 17.

Oberhalb des Transportbandes 13 ist mittels einer Halterung 19 ein Sensor 21 angeordnet, der einen Barcodeleser 23 aufweist, wie in Fig. 1 schematisch gezeigt. Der Barcodeleser 23 ist - auf an sich bekannte Weise - mit einer Laserdiode als Lichtsender und einem rotierenden Polygonspiegel sowie mit einer Fotodiode als Lichtempfänger ausgestattet. Ferner weist der Sensor 21 eine Auswerte- und Steuereinrichtung zur Steuerung des Barcodelesers 23 sowie zur Auswertung der vom Barcodeleser 23 erzeugten Lichtempfangssignale auf.

Der Barcodeleser 23 wird von der Auswerte- und Steuereinrichtung 25 derart angesteuert, dass er mittels des ausgesandten Laserstrahls periodisch einen fächerförmigen Überwachungsbereich 27 abtastet. Der Laserstrahl erscheint an dem Transportband 13 und an einem darauf befindlichen Versandpaket 15 als eine Abtastlinie 29.

Erfindungsgemäß ist der Sensor 21 mit einem Positionssignalempfänger 31 in Form einer Funkantenneneinheit sowie mit einem Neigungssensor 32 ausgestattet, die mit der Auswerte- und Steuereinrichtung 25 verbunden sind. Der Positionssignalempfänger 31 vermag die von einem satellitengestützten Positionssignalsendesystem ausgesendeten Referenzsignale zu empfangen, zu verstärken und als Positionserfassungssignale an die Auswerte- und Steuereinrichtung 25 weiterzuleiten. Der Neigungssensor 32 übermittelt an die Auswerte- und Steuereinrichtung 25 ein zusätzliches Positionserfassungssignal, das der Winkellage des Sensors 21 bezüglich der Horizontalen entspricht. Die Auswerte- und Steuereinrichtung 25 kann aus diesen Positionserfassungssignalen eine absolute Raumposition des Positionssignalempfängers 31 in X-, Y-, Z-Koordinaten, die Ausrichtung des Positionssignalempfängers 31 sowie die Winkellage des Neigungssensors 32 bezüglich der Horizontalen berechnen, so dass die entsprechenden Lagedaten des Sensors 21 bekannt sind.

Aufgrund dieser Lagedaten kann der Sensor 21 auch die Erstreckung und Lage des Überwachungsbereichs 27 und der Abtastlinie 29 ableiten. Dadurch kann die Auswerte- und Steuereinrichtung 25 ein Objekterfassungssignal des Barcodelesers 23, also beispielsweise einen identifizierten und einen eingelesenen Barcode 17, eindeutig einer Raumposition entlang des Transportbands 13 und somit einem Versandpaket 15 zuordnen. Das betreffende Versandpaket 15 kann deshalb nachfolgend gemäß einer dem Barcode 17 entsprechenden Sortierweise aussortiert werden, ohne dass es zu Verwechslungen zwischen den Versandpaketen 15 kommt.

Die erläuterte räumliche Zuordnung zwischen einem Objekterfassungssignal des Barcodelesers 23 und einem Barcode 17 bzw. Versandpaket 15 kann beispielsweise durch - in Fig. 1 nicht gezeigte - Inkrementalgeber unterstützt werden, die an die Auswerte- und Steuereinrichtung 25 ein Förderlagesignal liefern, das die Förderlage oder Fördergeschwindigkeit des Transportbands 13 repräsentiert.

Die erläuterte Ausgestaltung des Sensors 21 mit dem Positionssignalempfänger 31, dem Neigungssensor 32 und der Auswerte- und Steuereinrichtung 25 hat den Vorteil, dass die Raumposition und Winkellage des Sensors 21 und somit die Relativlage bezüglich des Transportbands 13 und der darauf befindlichen Versandpakete 15 und Barcodes 17 auf einfache Weise ermittelt werden kann, ohne dass zu diesem Zweck eine aufwändige manuelle Vermessung des Sensors 21, des Überwachungsbereichs 27 und des umgebenden Raums erforderlich ist.

Diese vorteilhaft einfache Positions- und Lagebestimmung kann von besonderer Bedeutung sein, falls der Sensor 21 - beispielsweise aufgrund entsprechender Ausgestaltung der Halterung 19 - für verschiedene Anwendungen in unterschiedliche Raumpositionen oder Winkellagen gebracht werden soll. Dies kann beispielsweise erwünscht sein, falls das Transportband 13 umkonfiguriert werden soll oder falls der Sensor 21 zeitweise ein benachbartes Transportband überwachen soll.

Im Falle einer derartigen Positions- oder Lageänderung des Sensors 21 kann ohne weiteres umgehend wieder eine räumliche Zuordnung des Überwachungsbereichs 27 und der Abtastlinie 29 zu dem betreffenden Transportband hergestellt werden. Hierfür bestimmt die Auswerte- und Steuereinrichtung 25 aufgrund von Positionserfassungssignalen, die mittels des Positionssignalempfängers 31 und des Neigungssensors 32 neu ermittelt werden, die neue Raumposition und Winkellage. Diese Daten setzt die Auswerte- und Steuereinrichtung 25 zu Förderlagedaten in Beziehung, die die Förderlage des Transportbands 13 oder die Position eines darauf befindlichen Versandpakets 15 repräsentieren.

Zu dem Ausführungsbeispiel gemäß Figur 1 ist noch anzumerken, dass der gezeigte Positionssignalempfänger 31 alternativ oder zusätzlich zu dem Empfangen von Referenzsignalen eines satellitengestützten Sendesystems zum Empfangen von entsprechenden Referenzsignalen eines lokalen Positionssignalsenders ausgebildet sein kann. Außerdem ist es möglich, lediglich den gezeigten Positionssignalempfänger 31 ohne Neigungssensors 32, oder lediglich den Neigungssensor 32 ohne Positionssignalempfänger 31 an den Sensor 21 vorzusehen

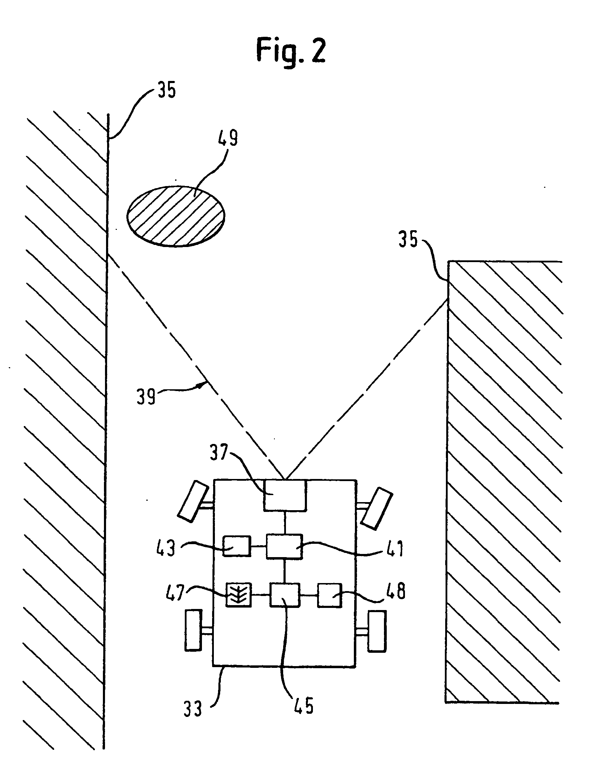

Fig. 2 zeigt ein weiteres Anwendungsbeispiel eines Sensors. Dargestellt ist in einer schematischen Draufsicht ein fahrerloses Transportfahrzeug 33, das sich entlang eines Korridors zwischen zwei Wänden 35 einer Lagerhalle bewegt. Um ein kollisionsfreies Manövrieren zu ermöglichen, ist das Transportfahrzeug 33 mit einem Laserscanner 37 ausgestattet, der - auf bekannte Weise - mittels eines Laserstrahls in Fahrrichtung die Umgebung entlang eines Überwachungsbereichs 37 abtastet. Die dabei aufgrund der Lichtreflexion gewonnenen Empfangssignale geben die aktuelle Winkellage des Laserscanners und die Distanz des jeweils reflektierenden Objekts wieder.

Diese Empfangssignale werden mittels einer Auswerte- und Steuereinrichtung 41 ausgewertet, indem die hierdurch ermittelten Ortsinformationen mit einem Ortsdatensatz verglichen werden, der den Lageplan und Aufbau der Lagerhalle repräsentiert und in einer mit der Auswerte- und Steuereinrichtung 51 verbundenen Speichereinrichtung 43 abgelegt ist. Die Auswerte- und Steuereinrichtung 41 liefert aufgrund dieses Vergleichs ein aktuelles Richtungssignal und Beschleunigungs-/Verzögerungssignal an eine - in Fig. 2 nicht gezeigte - Antriebseinheit des Transportfahrzeugs 33. Durch ständiges Abtasten der Wände 35 und Verfolgen der aktuellen Position anhand des in der Speichereinrichtung 43 gespeicherten Ortsdatensatzes kann das Transportfahrzeug 33 also sicher durch die Lagerhalle manövrieren.

Der Laserscanner 37 ist über die Auswerte- und Steuereinrichtung 41 mit einer weiteren Auswerte- und Steuereinrichtung 45 sowie mit einem hiermit verbundenen Positionssignalempfänger 47 und einem Kreiselsensor 48 gekoppelt. Der Positionssignalempfänger 47 empfängt ständig die Referenzsignale mehrerer, innerhalb der Lagerhalle installierter lokaler Positionssignalsender (nicht gezeigt) und leitet entsprechende Positionserfassungssignale an die Auswerte- und Steuereinrichtung 45 weiter. Der Kreiselsensor 48 bestimmt ständig seine aktuelle Ausrichtung innerhalb der Horizontalebene bezüglich einer einmalig vorbestimmten Referenzausrichtung, und er liefert ein entsprechendes Positionserfassungssignal an die Auswerte- und Steuereinrichtung 45. Diese berechnet aus diesen Relativlagedaten die aktuelle Raumposition und Ausrichtung des Transportfahrzeugs 33 bezüglich des gespeicherten Ortsdatensatzes. Diese Informationen werden an die Auswerte- und Steuereinrichtung 41 des Laserscanners 37 weitergegeben, so dass diese zu Kontrollzwecken überprüfen kann, ob die aktuelle Position des Transportfahrzeugs 33 aufgrund der Daten des Laserscanners 37 und der Speichereinrichtung 43 korrekt ermittelt wurde.

Diese zusätzliche Kontrollmöglichkeit erweist sich beispielsweise dann als besonders vorteilhaft, wenn in dem Überwachungsbereich 39 ein Hindernis 49 - beispielsweise eine Aufsichtsperson - detektiert wird, das sich lediglich temporär in der Lagerhalle befindet und demzufolge nicht innerhalb des in der Speichereinrichtung 43 abgelegten Ortsdatensatzes verzeichnet ist. Während ein derartiges Hindernis 49 unter ungünstigen Bedingungen zu einer Orientierungslosigkeit des Transportfahrzeugs 33 führen kann, ist diese Gefahr dadurch verringert, dass aufgrund des mit dem Laserscanner 37 gekoppelten Positionssignalempfängers 47 zusätzliche Daten der aktuellen Raumposition zu Vergleichszwecken zur Verfügung stehen.

Zu dem Ausführungsbeispiel gemäß Figur 2 ist noch anzumerken, dass alternativ oder zusätzlich zu dem erläuterten Positionssignalempfänger 47 auch ein solcher Empfänger vorgesehen sein kann, der die Referenzsignale eines satellitengestützten Positionssignalsendesystems empfängt. Ferner ist der Kreiselsensor 48 nicht zwingend erforderlich. Umgekehrt ist es auch möglich, lediglich den Kreiselsensor 48 zur Bestimmung der aktuellen Ausrichtung des Transportfahrzeugs 33 vorzusehen, wobei auf den Positionssignalempfänger 47 verzichtet wird.

### Bezugszeichenliste

- 11: Transportrichtung
- 13: Transportband
- 15: Versandpaket
- 17: Barcode
- 19: Halterung
- 21: Sensor
- 23: Barcodeleser
- 25: Auswerte- und Steuereinrichtung
- 27: Überwachungsbereich
- 29: Abtastlinie
- 31: Positionssignalempfänger
- 32: Neigungssensor
- 33: Transportfahrzeug
- 35: Wand
- 37: Laserscanner
- 39: Überwachungsbereich
- 41: Auswerte- und Steuereinrichtung
- 43: Speichereinrichtung
- 45: Auswerte- und Steuereinrichtung
- 47: Positionssignalempfänger
- 48: Kreiselsensor
- 49: Hindernis

## Patentansprüche

1. Optoelektronische Sensoranordnung mit einem Sensor (21) mit einem Codeleser (23) oder einem Laserscanner,
wobei der Sensor gekoppelt ist mit
- einer Positionsmesseinrichtung (31, 32) zur Erzeugung wenigstens eines Positionserfassungssignals, sowie mit
- einer Auswerte- und Steuereinrichtung (25) zumindest zur Berechnung einer aktuellen Raumposition des Sensors anhand des Positionserfassungssignals, wobei mittels der Auswerte-und Steuereinrichtung ein Objekterfassungssignal des Codelesers oder des Laserscanners mit der berechneten Raumposition verknüpfbar ist,
**dadurch gekennzeichnet,**
**dass** die Positionsmesseinrichtung (31, 32) und die Auswerte- und Steuereinrichtung (25) in den Sensor dauerhaft integriert sind,
**dass** der den Codeleser oder Laserscanner, ferner die Positionsmesseinrichtung und die Auswerte- und Steuereinrichtung aufweisende Sensor (21) mittels einer Halterung (19) in einer stationären Betriebsanordnung angeordnet ist, und
**dass** die Positionsmesseinrichtung einen Positionssignalempfänger (31) zum Empfangen von Referenzsignalen eines satellitengestützten Positionssignalsendesystems und/oder zum Empfangen von Referenzsignalen wenigstens eines lokalen Positionssignalsenders aufweist, wobei die Auswerte- und Steuereinrichtung (25) zur Berechnung einer absoluten Raumposition des Sensors aus den Positionserfassungssignalen des Positionssignalempfängers ausgebildet ist.

2. Sensoranordnung Anspruch 1,
**dadurch gekennzeichnet,**
**dass** es sich bei dem satellitengestützten Positionssignalsendesystem um das GPS Global Positioning System oder das Galileo Satellitennavigationssystem handelt.

3. Sensoranordnung nach einem der vorhergehenden Ansprüche,
**dadurch gekennzeichnet, dass** die Positionsmesseinrichtung einen Ausrichtungssensor, insbesondere einen Kreiselsensor zur Erzeugung wenigstens eines Positionserfassungssignals aufweist, das einer aktuellen Ausrichtung des Sensors (21) entspricht, und/oder
**dass** die Positionsmesseinrichtung einen Neigungssensor (32) zur Erzeugung wenigstens eines Positionserfassungssignals aufweist, das einer aktuellen Winkellage des Sensors (21) entspricht,
und/oder
**dass** durch die Auswerte- und Steuereinrichtung (25, 45) eine Bestimmung einer aktuellen Raumposition auslösbar ist.

4. Sensoranordnung nach einem der vorhergehenden Ansprüche,
**dadurch gekennzeichnet,**
**dass** die Bestimmung einer aktuellen Raumposition
- infolge eines von einem Anwender erteilten Auslösebefehls,
- infolge einer Inbetriebnahme des Sensors (21),
- gemäß vorgegebener Zeitintervalle, und/oder
- infolge des Ergebnisses einer vorherigen Objekterfassung auslösbar ist.

5. Sensoranordnung nach einem der vorhergehenden Ansprüche,
**dadurch gekennzeichnet,**
**dass** die Positionsmesseinrichtung (31, 32, 47, 48) durch die Auswerte- und Steuereinrichtung (25, 45) zu einer ständigen Erzeugung von Positionserfassungssignalen ansteuerbar ist.

6. Sensoranordnung nach einem der vorhergehenden Ansprüche,
**dadurch gekennzeichnet,**
**dass** der Sensor (23) einen Lichtsender zum Aussenden eines Sendelichtstrahls und einen Lichtempfänger zur Erzeugung von Lichtempfangssignalen in Abhängigkeit von einer Lichtbeaufschlagung aufweist, wobei die Auswerte- und Steuereinrichtung (25) vorzugsweise zur Steuerung des Lichtsenders und des Lichtempfängers sowie zur Auswertung der Lichtempfangssignale ausgebildet ist.

7. Optoelektronisches Sensorsystem, zumindest mit
- einem lokalen Positionssignalsender zum Aussenden von Referenzsignalen, und
- einer optoelektronischen Sensoranordnung mit einem Sensor (21), der mit einem Positionssignalempfänger (31) zum Empfangen der Referenzsignale gekoppelt und die nach einem der vorhergehenden Ansprüche ausgebildet ist.

## Claims

1. An opto-electronic sensor arrangement comprising a sensor (21) having a code reader (23) or a laser scanner,
wherein the sensor is coupled to
- a position measuring device (31, 32) for the production of at least one position detection signal, as well as to
- an evaluation and control device (25) for at least the calculation of an actual spatial position of the sensor with respect to the position detection signal, with an object detection signal of the code reader or of the laser scanner being able to be linked with the calculated spatial position by means of the evaluation and control unit,
**characterized in that**
the position measuring device (31, 32) and the evaluation and control device (25) are permanently integrated into the sensor;
**in that** the sensor (21) having the code reader or laser scanner, and further having the position measuring device and the evaluation and control device, is arranged in a stationary operating arrangement by means of a holder (19); and
**in that** the position measuring device has a position signal receiver (31) for the reception of reference signals of a satellite-aided position signal transmission system and/or for the reception of reference signals of at least one local position signal transmitter, with the evaluation and control device (25) being configured for the calculation of an absolute spatial position of the sensor from the position detection signals of the position signal receiver.

2. A sensor arrangement in accordance with claim 1, **characterized in that** the satellite-aided position signal transmission system is the GPS global positioning system or the Galileo satellite navigation system.

3. A sensor arrangement in accordance with any one of the preceding claims, **characterized in that** the position measuring device has an alignment sensor, in particular a gyroscopic sensor for the production of at least one position detection signal which corresponds to a current alignment of the sensor (21); and/or **in that** the position measuring device has an inclination sensor (32) for the production of at least one position detection signal which corresponds to a current angular position of the sensor (21); and/or **in that** a determination of a current spatial position can be triggered by the evaluation and control device (25, 45).

4. A sensor arrangement in accordance with any one of the preceding claims, **characterized in that** the determination of a current spatial position can be triggered
- as a consequence of a trigger command given by a user;
- as a consequence of putting the sensor (21) into operation;
- in accordance with pre-determined time intervals; and/or
- as a consequence of the result of a previous object detection.

5. A sensor arrangement in accordance with any one of the preceding claims, **characterized in that** the position measuring device (31, 32, 47, 48) can be controlled by the evaluation and control device (25, 45) for a continuous production of position detection signals.

6. A sensor arrangement in accordance with any one of the preceding claims, **characterized in that** the sensor (23) has a light transmitter for the transmission of a transmitted light beam and a light receiver for the production of received light signals in dependence on an incidence of light, with the evaluation and control device (25, 41) preferably being formed for the control of the light transmitter and of the light receiver as well as for the evaluation of the received light signals.

7. An opto-electronic sensor system, at least comprising
- a local position signal transmitter for the transmission of reference signals; and
- an opto-electronic sensor arrangement comprising a sensor (21) which is coupled to a position signal receiver (31) for the reception of the reference signals, with the sensor arrangement being formed in accordance with any one of the preceding claims.

## Revendications

1. Ensemble détecteur optoélectronique comportant un détecteur (21) muni d'un lecteur de code (23) ou d'un scanneur laser,
le détecteur étant couplé à
- un dispositif de mesure de position (31, 32) pour générer au moins un signal de détection de position, ainsi qu'à
- un dispositif d'évaluation et de commande (25) au moins pour calculer une position actuelle dans l'espace du détecteur en se basant sur le signal de détection de position, un signal de détection d'objet du lecteur de code ou du scanneur laser pouvant être mis en relation avec la position calculée dans l'espace, au moyen du dispositif d'évaluation et de commande,
**caractérisé en ce que**
le dispositif de mesure de position (31, 32) et le dispositif d'évaluation et de commande (25) sont intégrés à demeure dans le détecteur,
**en ce que** le détecteur (21) comportant le lecteur de code ou le scanneur laser et comprenant en outre le dispositif de mesure de position et le dispositif d'évaluation et de commande, est disposé dans un agencement de fonctionnement stationnaire au moyen d'une monture (19), et
**en ce que** le dispositif de mesure de position comprend un récepteur de signal de position (31) pour recevoir des signaux de référence d'un système émetteur de signal de position assisté par satellite et/ou pour recevoir des signaux de référence d'au moins un émetteur de signal de position local, le dispositif d'évaluation et de commande (25) étant réalisé pour calculer une position absolue dans l'espace du détecteur à partir des signaux de détection de position du récepteur de signal de position.

2. Ensemble détecteur selon la revendication 1,
**caractérisé en ce que**
le système émetteur de signal de position assisté par satellite est le système GPS (Global Positioning System) ou du système de navigation par satellite Galileo.

3. Ensemble détecteur selon l'une des revendications précédentes,
**caractérisé en ce que**
le dispositif de mesure de position comprend un détecteur d'orientation, en particulier un détecteur gyroscopique pour générer au moins un signal de détection de position qui correspond à une orientation actuelle du détecteur (21), et/ou
**en ce que** le dispositif de mesure de position comprend un détecteur d'inclinaison (32) pour générer au moins un signal de détection de position qui correspond à une position angulaire actuelle du détecteur (21),
et/ou
**en ce qu'**au moyen du dispositif d'évaluation et de commande (25, 45), il est possible de déclencher une détermination d'une position actuelle dans l'espace.

4. Ensemble détecteur selon l'une des revendications précédentes,
**caractérisé en ce que**
la détermination d'une position actuelle dans l'espace peut être déclenchée
- à la suite d'un ordre de déclenchement donné par un utilisateur,
- à la suite d'une mise en service du détecteur (21),
- suivant des intervalles temporels prédéterminés, et/ou
- à la suite du résultat de la détection préalable d'un objet.

5. Ensemble détecteur selon l'une des revendications précédentes,
**caractérisé en ce que**
le dispositif de mesure de position (31, 32, 47, 48) peut être piloté par le dispositif d'évaluation et de commande (25, 45) en vue d'une génération permanente de signaux de détection de position.

6. Ensemble détecteur selon l'une des revendications précédentes,
**caractérisé en ce que**
le détecteur (23) comprend un émetteur de lumière pour émettre un rayon de lumière émis et un récepteur de lumière pour générer des signaux de réception de lumière en fonction de l'incidence d'une lumière, le dispositif d'évaluation et de commande (25) étant réalisé de préférence pour commander l'émetteur de lumière et le récepteur de lumière ainsi que pour évaluer les signaux de réception de lumière.

7. Système détecteur optoélectronique, comportant au moins
- un émetteur de signal de position local pour émettre des signaux de référence, et
- un ensemble détecteur optoélectronique qui est muni d'un détecteur (21) couplé avec un récepteur de signal de position (31) pour recevoir les signaux de référence et qui est réalisé selon l'une des revendications précédentes.
